# EUROPÄISCHE PATENTSCHRIFT

(11) **EP 4 015 683 B1**
(45) Veröffentlichungstag und Bekanntmachung des Hinweises auf die Patenterteilung: **13.09.2023**
(21) Anmeldenummer: 20215384.7
(22) Anmeldetag: 18.12.2020
(51) Int. Cl.: D01H 1/115, D01H 13/22

(54) **VERFAHREN ZUR ÜBERWACHUNG DES SPINNVORGANGS AN EINER SPINNVORRICHTUNG, SPINNSTELLE EINER LUFTSPINNMASCHINE SOWIE SPINNVORRICHTUNG**
METHOD FOR MONITORING THE SPINNING PROCESS ON A SPINNING DEVICE, SPINNING STATION OF AN AIR SPINNING MACHINE AND SPINNING DEVICE
PROCÉDÉ DE SURVEILLANCE DU PROCESSUS DE FILAGE SUR UN DISPOSITIF DE FILAGE, POSTE DE FILAGE D'UN MÉTIER À FILER À AIR AINSI QUE DISPOSITIF DE FILAGE

(43) Veröffentlichungstag der Anmeldung: 22.06.2022
(73) Patentinhaber: Saurer Intelligent Technology AG, 9320 Arbon Thurgau (CH)
(72) Erfinder: Weide, Thomas, 41189 Mönchengladbach (DE); Werner, Roland, 47807 Krefeld (DE); Kötzsch, Anja, 40219 Düsseldorf (DE)
(74) Vertreter: Morgenthum-Neurode, Mirko

(56) Entgegenhaltungen:
- EP-A1- 3 040 458
- DE-A1-102007 009 074
- JP-U- H 076 274

## Beschreibung

Die Erfindung betrifft eine Spinnstelle einer Luftspinnmaschine mit einer Spinnvorrichtung sowie eine Spinnvorrichtung zur Herstellung eines Fadens aus einem zugeführten Faserband mittels eines umlaufenden Luftstroms, mit
- einem in einem Spinngehäuse angeordneten hohlen Spinnkonus, wobei das Spinngehäuse eine koaxial und im Abstand zum Spinnkonus angeordnete, einen Hüllspalt bildende Hüllwand aufweist und
- einer mit Druckluft beaufschlabaren Düsenvorrichtung zur Erzeugung eines den Spinnkonus im Hüllspalt umlaufenden Luftstroms.

Ferner betrifft die Erfindung ein Verfahren zur Überwachung des Spinnvorgangs an einer Spinnvorrichtung sowie die Spinnvorrichtung.

Spinnvorrichtungen, Spinnvorrichtungen aufweisende Spinnstellen sowie aus einer Mehrzahl nebeneinander angeordneter Spinnstellen gebildete Luftspinnmaschinen sind in vielfältigen Ausgestaltungen aus dem Stand der Technik bekannt.

Den Spinnvorrichtungen der eingangs genannten Art, wie sie bspw. aus der DE 10 2007 009 074 A1 bekannt sind, wird typischerweise über ein Streckwerk ein Faserband zugeführt, welches zuvor entsprechend der zu erreichenden Fadenfeinheit mittels des Streckwerks verzogen wurde. Innerhalb der Spinnvorrichtung werden die äußeren Fasern des Faserverbands mit Hilfe einer durch eine oder mehrere Luftdüsen erzeugten Rotationsströmung in einem Hüllspalt zwischen einem Spinnkonus und einer Hüllwand des Spinngehäuses um die innenliegenden Kernfasern des Faserbands gewunden und bilden hierdurch die für die gewünschte Fadenfestigkeit des Fadens ausschlaggebenden Umwindefasern. Hierdurch entsteht ein Faden mit einer echten Drehung, welcher schließlich über eine Austrittsöffnung der Spinnvorrichtung abgezogen und z.B. auf einer Hülse aufgewickelt werden kann.

Infolge von Prozessstörungen während des Spinnvorgangs, bspw. hervorgerufen durch Verstopfungen oder Verschmutzungen der Düsen oder des Hüllspalts, kann das Problem sogenannter drehungsfreier Stellen bzw. Stellen mit geringer Umwindefaserzahl und/oder geringer Drehung im Faden auftreten. Diese Stellen bilden Schwachstellen im Faden, welche zu Fadenbrüchen bei der Weiterverarbeitung führen können. Über einen längeren Zeitraum bestehende Prozessstörungen können dabei überdies zur Folge haben, dass vollständig mit fehlerbehafteten Fäden versehene Spulen hergestellt werden, die nicht zur Weiterverarbeitung geeignet sind.

Um solche Problemstellen im Faden sicher auszuschließen, ist es erforderlich, im Falle von Prozessstörungen, die Fehlstellen an den Fäden zur Folge haben, den Spinnprozess zu unterbrechen. Voraussetzung hierfür ist eine zuverlässige Detektion von Prozessstörungen, was derzeit nur indirekt über eine Überwachung des aus der Spinnvorrichtung austretenden Fadens erfolgen kann, wobei bspw. Haarigkeitsunterschiede bzw. Durchmesserunterschiede Indizien für Prozessstörungen während des Spinnprozesses darstellen können. Eine derartige Erfassung von Prozessstörungen weist jedoch den Nachteil auf, dass diese nur eine bedingte Zuverlässigkeit besitzen und überdies bereits zu einem fehlerbehafteten Faden geführt haben können.

Hiervon ausgehend liegt der Erfindung die Aufgabe zugrunde, eine Spinnstelle einer Luftspinnmaschine mit einer Spinnvorrichtung sowie eine solche Spinnvorrichtung bereitzustellen, welche die Fadenqualität mindernde Prozessstörungen bereits während des Spinnprozesses, also ursächlich erfassen kann. Ferner liegt der Erfindung die Aufgabe zugrunde, ein Verfahren zur Überwachung des Spinnprozesses bereitzustellen.

Die Erfindung löst die Aufgabe durch eine Spinnvorrichtung mit den Merkmalen des Anspruchs 1, eine Spinnstelle einer Luftspinnmaschine mit den Merkmalen des Anspruchs 6 sowie durch ein Verfahren mit den Merkmalen des Anspruchs 7. Vorteilhafte Weiterbildungen der Spinnvorrichtung sind in den abhängigen Ansprüchen 2 bis 5 dargestellt.

Kennzeichnend für die erfindungsgemäße Spinnvorrichtung ist, dass der Spinnkonus und die Hüllwand zur Bildung einer Kondensatoreinheit einander unter Zwischenlage des Hüllspaltes gegenüberliegend angeordnete, ein Elektrodenpaar bildende Elektroden aufweisen.

Gemäß der Erfindung ist vorgesehen, dass der Spinnkonus und die Hüllwand, bzw. Abschnitte von Spinnkonus und Hüllwand, jeweils eine Elektrode einer Kondensatoreinheit aufweisen, insbesondere bilden. Die Kapazität der Kondensatoreinheit, bzw. des gebildeten Kondensators hängt dabei neben den geometrischen Abmessungen der Elektroden sowie dem Abstand der Elektroden voneinander von dem zwischen den beiden Elektroden angeordneten Material ab. Gegenüber der Kapazität der Kondensatoreinheit im fadenfreien Zustand, d. h., wenn der den Zwischenraum ausfüllende Hüllspalt zwischen den Elektroden allein durch die Umgebungsluft ausgefüllt ist, bewirken in dem Hüllspalt angeordnete Umwindefasern während eines Spinnbetriebs eine messbare Veränderung der Kapazität der Kondensatoreinheit. Die Veränderung der Kapazität der Kondensatoreinheit kann abhängig von der Auslegung der Kondensatoreinheit eine messbare Erhöhung oder Reduzierung sein.

Über die Kondensatoreinheit lässt sich somit die Masse der im Hüllspalt zwischen den Elektroden angeordneten Umwindefasern kontinuierlich erfassen. Nimmt die Masse der Umwindefasern im Bereich zwischen den Elektroden ab, dann reduziert sich vorzugsweise die Kapazität der Kondensatoreinheit. Ein Absinken der Kapazität der Kondensatoreinheit unter einen für einen ordnungsgemäßen Faden festgelegten unteren Grenzwert, signalisiert somit, dass die Masse der erforderlichen Umwindefasern unterschritten ist. Wird über eine mit der Kondensatoreinheit verbundene Auswerteinheit eine entsprechend bevorzugte Reduzierung der Kapazität unter den zuvor festgelegten Grenzwert festgestellt, dann können die entsprechenden Spinnstellen sofort abgestellt und geeignete Störungsbeseitigungsmaßnahmen durchgeführt werden. Auch ein Anstieg der Kapazität über einen oberen Grenzwert ist mittels einer an die Kondensatoreinheit angeschlossenen Auswerteinheit erfassbar. Übersteigt die Kapazität einen festgelegten oberen Grenzwert, ist dies bspw. ein Indiz für eine übermäßige Ansammlung von Fasern, die eine Rotation der Umwindefasern blockieren, sodass in der Folge der Spinnprozesses ebenfalls gestoppt werden kann.

Die erfindungsgemäße Spinnvorrichtung ermöglicht es somit, den laufenden Spinnprozess kontinuierlich zu überwachen, wobei Störungen des Spinnprozesses aufgrund von einer zu geringen Anzahl von Umwindefasern oder Blockierungen im Hüllspalt, welche zu einem minderwertigen Faden führen können, unmittelbar erkannt werden können. Die erfindungsgemäße Spinnvorrichtung verhindert somit bereits die Entstehung eines fehlerbehafteten Fadens und ermöglicht es daher, auf nachgelagerte Untersuchungen des Fadens zu verzichten. Insgesamt gewährleistet damit die erfindungsgemäße Spinnvorrichtung in besonderer Weise die fehlerfreie Herstellung eines Fadens mit den geforderten Eigenschaften.

Die Ausbildung der Elektroden an oder mit der Hüllwand bzw. dem Spinnkonus kann grundsätzlich in beliebiger Weise erfolgen. So besteht bspw. die Möglichkeit, die Elektroden einstückig mit der Hüllwand und/oder dem Spinnkonus auszubilden, wobei hierzu Abschnitte der Hüllwand und/oder des Spinnkonus als Elektroden fungieren, welche jedoch zur Bildung einer Kondensatoreinheit gegenüber den übrigen Bauteilen isoliert sein müssen. Nach einer besonders vorteilhaften Ausgestaltung der Erfindung ist jedoch vorgesehen, dass die Elektroden einander unter Zwischenlage des Hüllspaltes gegenüberliegend an der Hüllwand und/oder dem Spinnkonus angebracht sind.

Gemäß dieser Ausgestaltung der Erfindung ist vorgesehen, dass separate Elektroden elektrisch nichtleitend mit der Hüllwand und/oder dem Spinnkonus verbunden sind. Die Anordnung der Elektroden kann dabei in beliebiger Weise, bspw. durch eine Klebeverbindung und/oder Schraubverbindung hergestellt werden, welche es im Bedarfsfall ermöglichen, die Elektroden einfach auszutauschen. Die Verwendung separater Elektroden zur Anordnung an der Hüllwand und/oder dem Spinnkonus ermöglicht es ferner in besonders einfacher Weise, diese gegenüber der Hüllwand und/oder dem Spinnkonus zu isolieren, wodurch eine Kondensatoreinheit auf einfache Weise gebildet werden kann.

Die Ausgestaltung der Kondensatoreinheit, d. h. unter anderem die Ausdehnung der Elektroden an der Hüllwand und dem Spinnkonus, ist grundsätzlich frei wählbar. So besteht bspw. die Möglichkeit, die Elektroden derart auszubilden, dass diese sich über den gesamten Umfang der Hüllwand und des Spinnkonus erstrecken, sodass dann eine Kondensatoreinheit nach Art eines Ringkondensators gebildet wird, wodurch in besonders zuverlässiger Weise der Füllzustand des Hüllspalts erfasst werden kann.

Nach einer besonders bevorzugten Ausgestaltung der Erfindung ist vorgesehen, dass sich zwei oder mehrere Elektrodenpaare über einen in Umfangsrichtung von Hüllwand und Spinnkonus abgegrenzten Bereich erstrecken. Gemäß dieser Ausgestaltung der Erfindung erstrecken sich die Elektroden nur über einen abgegrenzten Abschnitt in Umfangrichtung des Hüllspalts. In Umfangsrichtung des Hüllspalts sind somit ein oder mehrere nicht durch eine Kondensatoreinheit eingeschlossene Abschnitte des Hüllspalts benachbart zu durch eine Kondensatoreinheit eingeschlossene Abschnitte angeordnet. Dabei können sich die Elektroden in bevorzugter Weise mit Ihrer Längsachse in Umfangsrichtung, schräg dazu oder orthogonal in Umfangsrichtung und/oder in Umfangsrichtung definiert verteilt erstrecken bzw. angeordnet sein. Die Längsachse der Elektrode entspricht derjenigen Erstreckung der Elektrode, welche vom Betrag größer als die dazu orthogonal verlaufende Erstreckung, welche als Breite der Elektrode verstanden wird, ist.

Diese bevorzugte Ausgestaltung der Erfindung ermöglicht neben oder alternativ zu einer Erfassung des Füllzustandes des Hüllspalts, also einer Anzahl der Umwindefasern bzw. der Faserdichte im Hüllspalt, auch eine Detektion der Rotationsgeschwindigkeit der Umwindefasern um den Spinnkonus im Hüllspalt, nachdem die Umwindefasern aufgrund ihrer Rotation um den Spinnkonus durch mittels einer Kondensatoreinheit überwachte sowie nicht überwachte Bereiche hindurchrotieren. Die Frequenz der dabei auftretenden Kapazitätsänderungen einer oder mehrerer Kondensatoreinheiten ermöglicht einen Rückschluss auf die Rotationsgeschwindigkeit der Umwindefasern um den Spinnkonus.

In besonders vorteilhafter Weise ist vorgesehen, dass die Elektroden spiralförmig an der Hüllwand und dem Spinnkonus angeordnet sind. Gemäß dieser Ausgestaltung der Erfindung erstrecken sich die Elektroden in bevorzugter Weise unter Berücksichtigung toleranzbedingter Abweichungen korrespondierend zu der Längsrichtung der Umwindefasern im Hüllspalt während des Spinnbetriebs, welche sich während des Spinnbetriebs spiralförmig um den Spinnkonus wickeln. Die der spiralförmigen Wicklung der Umwindefasern während des Spinnbetriebs entsprechende spiralförmige bzw. schraubenförmige Anbringung der Elektroden an der Hüllwand und dem Spinnkonus entspricht folglich der Ausrichtung der Umwindefasern, sodass diese bei ihrer Rotation um den Spinnkonus mit einem längeren Abschnitt durch die Kondensatoreinheiten hindurchgeführt werden, was dann zu höheren Kapazitätsänderungen führt, welche eine Signalverarbeitung vereinfachen.

Nach einer weiteren Ausgestaltung der Erfindung ist ferner vorgesehen, dass dem Hüllspalt zugewandte Oberflächen der Elektroden wenigstens einer Kondensatoreinheit ein elektrisch nicht leitfähiges Material aufweisen. Eine entsprechende Ausgestaltung der Oberflächen dieser Elektroden kann grundsätzlich in beliebiger Weise erfolgen, bspw. durch die Aufbringung einer Beschichtung oder einer sonstigen, die leitfähige Oberfläche überdeckenden Abdeckung. Eine entsprechende Ausgestaltung verhindert in besonders zuverlässiger Weise Störungen bei der Erfassung der Kapazitätsänderungen, welche bspw. aus einer statischen Aufladung durch die bewegten Fasern resultieren.

Die Erfindung löst die Aufgabe ferner durch eine Spinnstelle einer Luftspinnmaschine zum Herstellen eines Fadens aus einem zugeführten Faserband, mit einer Spinnvorrichtung zur Bildung des Fadens aus wenigstens einem über ein Streckwerk zugeführten Faserband, und einer Aufspuleinrichtung zum Aufspulen des Fadens auf eine Auflaufspule, wobei die Spinnvorrichtung in der vorbeschriebenen erfindungsgemäßen oder weitergebildeten Weise ausgebildet ist.

Die erfindungsgemäße Spinnstelle zeichnet sich dabei dadurch aus, dass aufgrund der Verwendung einer erfindungsgemäßen oder weitergebildeten Spinnvorrichtung an der Spinnmaschine Störungen des Spinnprozesses unmittelbar erkannt und der Spinnvorgang unterbrochen werden kann, sodass dann Störungsbeseitigungsmaßnahmen eingeleitet werden können. Durch die kontinuierliche Überwachung des Spinnprozesses kann die Entstehung eines Fadens mit von festgelegten Eigenschaften abweichenden Eigenschaften bereits vermieden werden, sodass darüber hinaus an der Luftspinnmaschine auf weitere Einrichtungen zur Überprüfung der Fadenqualität verzichtet werden kann.

Die Erfindung löst die Aufgabe ferner durch ein Verfahren zur Überwachung des Spinnvorgangs an einer vorbeschriebenen erfindungsgemäßen oder weitergebildeten Spinnvorrichtung, wobei zur Erfassung wenigstens einer Charakteristik der Umwindefasern, insbesondere der Anzahl an Umwindefasern bzw. der Faserdichte, im Hüllspalt die Schritte:
- Aufbauen eines elektrischen Feldes im Bereich zwischen den Elektroden,
- Erfassung der Kapazität der Kondensatoreinheit im fadenfreien Zustand,
- Erfassung der Kapazitätsänderung im Spinnbetrieb,
- Überwachung und Abgleich der Kapazitätsänderung mit für einen ordnungsgemäßen Faden bekannten oder zuvor ermittelten Referenzwerten,
durchgeführt werden.

Gemäß dem erfindungsgemäßen Verfahren ist vorgesehen, dass nach dem Aufbauen eines elektrischen Feldes an einer oder mehrerer Kondensatoreinheiten und der Erfassung deren Kapazität im fadenfreien Zustand, die im Spinnbetrieb aus der Anordnung der Umwindefasern im Bereich zwischen den Elektroden resultierende Kapazitätsänderung erfasst und kontinuierlich mit einem bekannten oder ermittelten, vorzugsweise bereits hinterlegten oder übermittelten, Referenzwert oder Referenzwertbereich zur Kapazitätsänderung im Spinnvorgang abgeglichen wird, wobei der Referenzwert bzw. der Referenzwertbereich zuvor für einen solchen Spinnvorgang ermittelt wurde, in denen ein Faden in ordnungsgemäßer Weise hergestellt wurde.

Abweichungen der Kapazitätsänderungen von dem Referenzwert bzw. dem Referenzwertbereich signalisieren Störungen im Spinnprozess, wobei beispielsweise eine über einen Grenzwert hinausgehende bzw. einen Grenzwertbereich überschreitende Kapazitätserhöhung auf eine übermäßige Anordnung von Fäden oder Fadenresten im Bereich zwischen den Elektroden hindeutet. Eine Unterschreitung eines unteren Grenzwerts der Kapazitätsänderung deutet vorzugsweise hingegen darauf hin, dass zu wenig Umwindefasern im Hüllspalt angeordnet sind, was bei dem Spinnprozess zu Schwachstellen des hergestellten Fadens führen kann.

In bevorzugter Weise erfolgt das Verfahren zur Überwachung des Spinnvorgangs an einer vorbeschriebenen weitergebildeten Spinnvorrichtung umfassend die spiralförmige Anordnung der Elektroden, indem mit den Schritten eine Erfassung von Kapazitätsänderungen und ihrer Frequenz im Spinnbetrieb und eine Überwachung und ein Abgleich der Frequenz der Kapazitätsänderungen mit einem für einen ordnungsgemäßen Faden bekannten oder zuvor ermittelten Referenzwert und/oder Referenzwertbereich erfolgt. Dadurch können die erfindungsgemäßen Schritte nicht nur zur Erfassung der Charakteristik der Faserdichte, sondern zusätzlich oder alternativ zur Erfassung der Charakteristik der Rotationsgeschwindigkeit der die Faserdichte ausmachenden Umwindefasern im Hüllspalt hergenommen werden.

Störungen im Spinnprozess können somit zusätzlich oder alternativ durch Erfassung einer Abweichung der Frequenz auftretender Kapazitätsänderungen von einem korrespondierenden Referenzwert oder Referenzwertbereich erfasst werden, welche auf eine zu niedrige oder zu hohe Rotationsgeschwindigkeit hinweisen.

So kann nach einer weiteren bevorzugten Ausführungsform im Falle einer Abweichung der Frequenz von einem vorbestimmten Referenzwert oder einem Referenzwertbereich der Spinnvorgang angepasst oder gestoppt werden, um im Falle eines außerhalb der Toleranz liegenden Wertes Schwachstellen im Faden zu vermeiden. Zur Anpassung des Spinnvorgangs kann beispielsweise wenigstens eine den Spinnvorgang ausmachende Charakteristik wie ein eine Wirbelkammer der Spinnvorrichtung beaufschlagender Druck, eine Faserbandzuführgeschwindigkeit und/oder eine Fadenabzugsgeschwindigkeit angepasst werden. Ein die Wirbelkammer beaufschlagender Druck kann dabei ein zur Erzeugung einer Wirbelluftströmung in der Wirbelkammer der Spinnvorrichtung anliegender Überdruck und/oder ein die Wirbelkammer beaufschlagener Unterdruck sein, welcher insbesondere zur Unterstützung der Abführung von Fasern, die im Spinnbetrieb nicht in den Faden eingebunden werden, aus der Spinnvorrichtung dient.

Alternativ oder zusätzlich kann nach einer weiteren bevorzugten Ausführungsform ein Verzug des Faserbandes in einer der Spinnvorrichtung vorgeschalteten Streckwerkvorrichtung angepasst werden, mittels welchem die Fadencharakteristik im Zuge des Spinnvorgangs ebenfalls geeignet beeinflussbar ist.

Besonders bevorzugt erfolgt im Zuge der Anpassung des Spinnvorgangs und/oder des Verzugs oder diesen nachgängig eine Ausreinigung des während der erfassten Toleranzabweichung vor Anpassung des Spinnvorgangs bzw. des Verzugs hergestellten Fadenabschnitts aus dem Faden.

Das vorgeschlagene Verfahren ermöglicht es somit, den Spinnprozess kontinuierlich zu überwachen und im Falle einer Störung, welche zu nicht tolerierbaren Qualitätsänderungen des Fadens führen würde, den Spinnprozess unmittelbar anzupassen oder zu unterbrechen, sodass die Herstellung eines fehlerbehafteten Fadens bzw. die Herstellung einer einen fehlerbehafteten Faden aufweisenden Auflaufspule vermieden werden kann.

Ein Ausführungsbeispiel der Erfindung wird nachstehend mit Bezug auf die Zeichnungen erläutert. In den Zeichnungen zeigen:
- Fig. 1: eine schematische Darstellung einer aus dem Stand der Technik bekannten Spinnvorrichtung mit vorgelagertem Streckwerk;
- Fig. 2: in einer Schnittansicht eine schematische Darstellung einer Spinnvorrichtung nach einem bevorzugten Ausführungsbeispiel im Bereich eines Hüllspalts zwischen einer Hüllwand und einem Spinnkonus;
- Fig. 3: eine schematische Darstellung des Spinnkonus der Spinnvorrichtung von Fig. 2 im Spinnbetrieb.

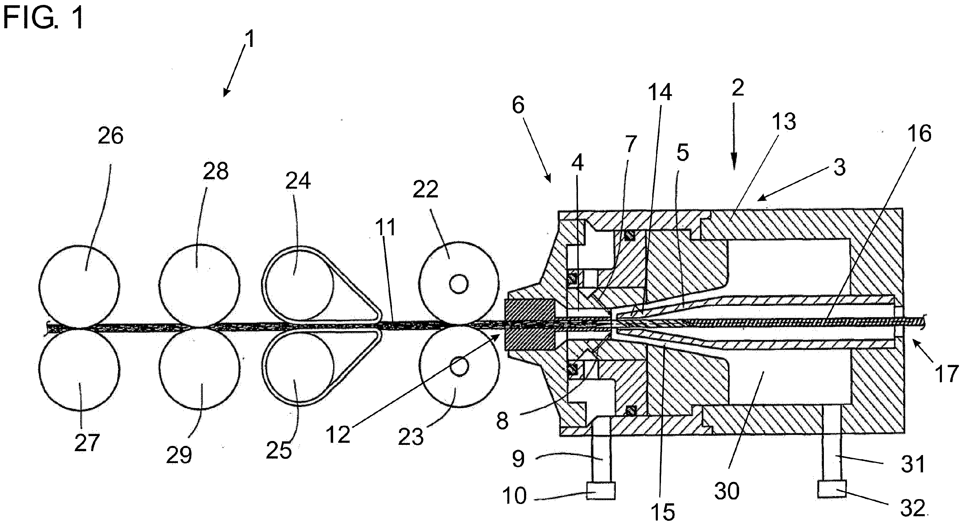

In Figur 1 ist zum allgemeinen Verständnis der Funktionsweise einer Spinnvorrichtung 2 der prinzipielle Aufbau eines Streckwerks 1 mit nachgelagerter, in diesem Ausführungsbeispiel mehrteiliger Spinnvorrichtung 2 dargestellt. Das von einer hier nicht dargestellten Faserbandquelle abgezogene Faserband 11 wird von einem durch eine Eingangsoberwalze 26 und eine Eingangsunterwalze 27 gebildeten Eingangswalzenpaar eingezogen. Anschließend wird das Faserband 11 zwischen der zweiten Streckwerkoberwalze 28 und der zweiten Streckwerkunterwalze 29 sowie der dritten Streckwerkoberwalze 24 und dritten Streckwerkunterwalze 25 und dem sich anschließenden Ausgangswalzenpaar aus Ausgangsoberwalze 22 und Ausgangsunterwalze 23 verzogen. Das verstreckte Faserband 11 gelangt anschließend über einen Eintrittsbereich 12 einer Düsenvorrichtung 6 in die Spinnvorrichtung 2 und wird darin unter Verwendung einer Fadenbildungseinheit 3 sowie der Düsenvorrichtung 6 der Spinnvorrichtung 2 zu einem Faden 16 umgebildet. Die den Eintrittsbereich 12 aufweisende Komponente der Spinnvorrichtung 2 bildet zusammen mit der Düsenvorrichtung 6 einen ersten Teil der Spinnvorrichtung 2. Die Fadenbildungseinheit 3 bildet den zweiten Teil der Spinnvorrichtung 2, wobei der erste und zweite Teil zum Öffnen der Spinnvorrichtung 2 zu Reinigungs- und Wartungszwecken zueinander bewegbar ausgestaltet und gelagert sind.

Die Düsenvorrichtung 6 weist Düsen 7, 8 auf, welche über Leitungen 9 mit einer Druckluftquelle 10 verbunden sind. Die aus den Düsen 7, 8 ausströmende Luft erzeugt innerhalb einer Wirbelkammer 4 eine Rotationsströmung, mit der das zugeführte verstreckte Faserband 11 beaufschlagt wird. Die Fadenbildungseinheit 3 weist ein als Spinnkonus 5 ausgebildetes Fadenbildungselement auf, welches im Zusammenwirken mit der Düsenvorrichtung 6 den Faden 16 bildet, der über den hohlen Spinnkonus 5 über eine Austrittsöffnung 17 aus der Spinnvorrichtung 2 abgezogen wird. Ein der Wirbelkammer 4 in Fadenabzugsrichtung folgender Expansionsraum 30 ist über eine weitere Leitung 31 mit einer Unterdruckluftquelle 32 zum Abführen von Faserresten gekoppelt.

In der Spinnvorrichtung 2 werden die äußeren Umwindefasern 19 aufgrund der innerhalb der Spinnvorrichtung 2 bzw. Wirbelkammer 4 erzeugten Wirbelluftströmung um die innenliegenden Kernfasern 18 des Faserbands 11 gewunden und gewährleisten hierdurch die gewünschte Festigkeit des Fadens 16.

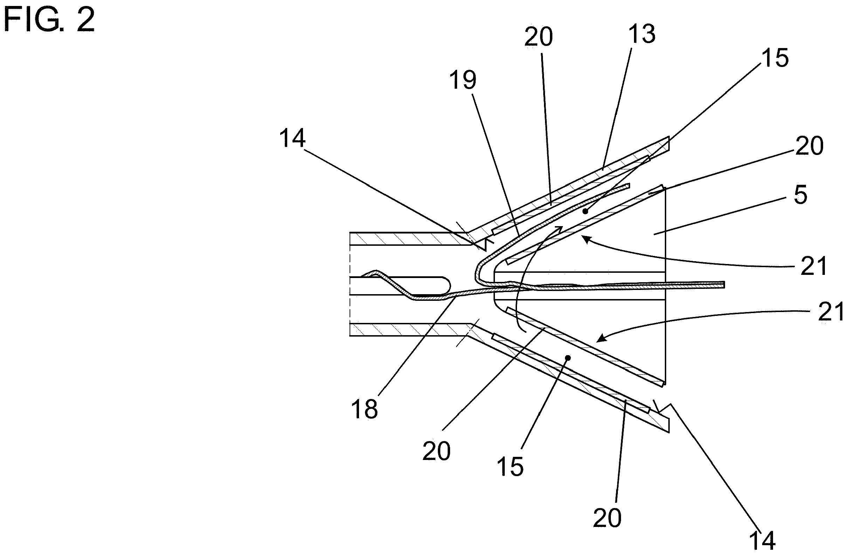

In Figur 2 ist eine Ausführungsform einer Spinnvorrichtung 2 nach einem bevorzugten Ausführungsbeispiel im Bereich des Spinnkonus 5 und der den Spinnkonus 5 koaxial umgebenden Hüllwand 14 eines Spinngehäuses 13 dargestellt. Die Kernfaser 18 des verstreckten Faserbands 11 gelangt in eine zentrale Öffnung des hohlen Spinnkonus 5, wohingegen die außenliegenden Umwindefasern 19 des Faserbands 11 aufgrund der den Spinnkonus 5 im Bereich des Hüllspalts 15 zwischen der Hüllwand 14 und dem Spinnkonus 5 umlaufenden Luftströmung in den Hüllspalt 15 gelangen. Aufgrund der umlaufenden Luftströmung im Hüllspalt 15 rotieren dabei die Umwindefasern 19 um den Spinnkonus 5 und werden beim Abziehen des Fadens 16 spiralförmig um die Kernfaser 18 gewickelt.

Zur Erfassung der Faserdichte im Hüllspalt 15 sind an dem Spinnkonus 5 und der Hüllwand 14 einander unter Zwischenlage des Hüllspalts 15 gegenüberliegende Elektroden 20 angeordnet, die gemeinsam eine Kondensatoreinheit 21 bilden. Die Elektroden 20 sind gegenüber dem Spinnkonus 5 bzw. dem Spinngehäuse 13 isoliert, sodass nach dem Aufbauen eines elektrischen Feldes zwischen den Elektroden 20 die aus den Elektroden 20 gebildete Kondensatoreinheit 21 beim Durchlaufen der Umwindefasern 19 eine Kapazitätsänderung, bspw. eine Kapazitätserhöhung, gegenüber einem faserfreien Hüllspalt 15 erfährt.

Mittels Überwachung und Abgleich der Kapazitätsänderung mit für einen ordnungsgemäßen Faden gekannten oder ermittelten Referenzwert, welcher abrufbar hinterlegt oder übermittelbar sein kann, lassen sich somit Rückschlüsse über den Füllzustand des Hüllspalts 15, insbesondere auf eine Anzahl der Umwindefasern 19 bzw. die Faserdichte, ziehen, wobei insbesondere eine übermäßige Kapazitätserhöhung auf eine Verschmutzung des Hüllspalts 15 und eine Verringerung der Kapazität gegenüber einem Referenzwert auf eine zu geringe Anordnung von Umwindefasern 19 im Hüllspalt 15 hinweisen kann.

Bei dem in Figur 2 dargestellten Ausführungsbeispiel erstrecken sich die Elektroden 20 einander gegenüberliegend über die gesamte Umfangsfläche des Spinnkonus 5 bzw. der Hüllwand 14 und bilden somit eine Kondensatoreinheit 21 nach Art eines Ringkondensators.

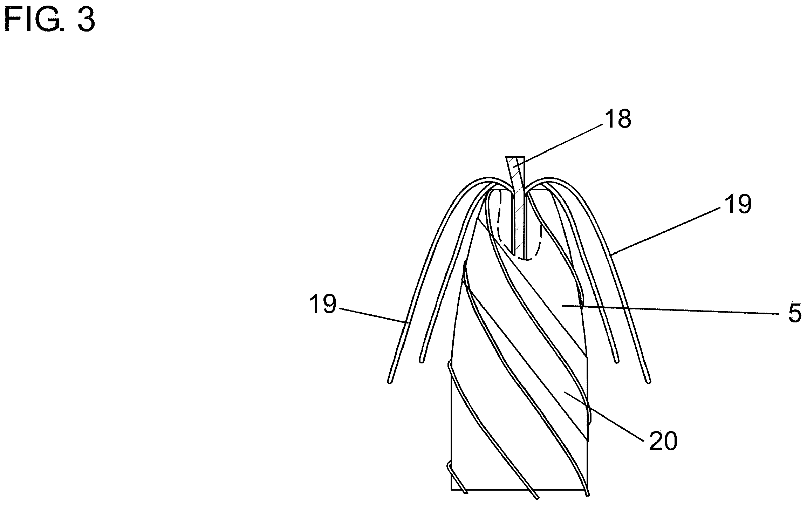

In dem in Figur 3 dargestellten Ausführungsbeispiel erstrecken sich die Elektroden 20 nur über einen Teilbereich spiralförmig über den Spinnkonus 5 sowie in entsprechender Weise an der gegenüberliegenden, hier nicht dargestellten Hüllwand 14 des Spinngehäuses 13. Die spiralförmige Ausrichtung der Elektrode 20 entspricht dabei der Ausrichtung der Umwindefasern im Spinnbetrieb aufgrund der erzeugten Luftströmung innerhalb des Hüllspalts 15. Diese Ausrichtung der Elektrode 20 ermöglicht somit eine gute Erfassung der Umwindefasern 19 im Bereich zwischen den Elektroden 20, wobei gleichzeitig über die Frequenz der sich beim Durchlauf durch die Kondensatoreinheit 21 ergebenden Kapazitätsänderung Rückschlüsse über die Rotationsgeschwindigkeit der Umwindefasern 19 um den Spinnkonus 5 sowie daraus ableitbare Maßnahmen wie beispielsweise eine Anpassung des Spinnvorgangs, eine Anpassung eines Verzugs in dem Streckwerk 1 und/oder ein Stoppen des Spinnvorgangs sowie ggf. eine Ausreinigung des während der erfassten Toleranzabweichung vor Anpassung des Spinnvorgangs bzw. des Verzugs hergestellten Fadenabschnitts aus dem Faden möglich sind.

### Bezugszeichenliste

- 1: Streckwerk
- 2: Spinnvorrichtung
- 3: Fadenbildungseinheit
- 4: Wirbelkammer
- 5: Spinnkonus
- 6: Düsenvorrichtung
- 7: Düse
- 8: Düse
- 9: Leitung
- 10: Druckluftquelle
- 11: Faserband
- 12: Eintrittsbereich
- 13: Spinngehäuse
- 14: Hüllwand
- 15: Hüllspalt
- 16: Faden
- 17: Austrittsöffnung
- 18: Kernfaser
- 19: Umwindefasern
- 20: Elektrode
- 21: Kondensatoreinheit
- 22: Ausgangsoberwalze
- 23: Ausgangsunterwalze
- 24: dritte Streckwerkoberwalze
- 25: dritte Streckwerkunterwalze
- 26: Eingangsoberwalze
- 27: Eingangsunterwalze
- 28: zweite Streckwerkoberwalze
- 29: zweite Streckwerkunterwalze
- 30: Expansionsraum
- 31: weitere Leitung
- 32: Unterdruckluftquelle

## Patentansprüche

1. Spinnvorrichtung zur Herstellung eines Fadens (16) aus einem zugeführten Faserband mittels eines umlaufenden Luftstroms, mit
- einem in einem Spinngehäuse (13) angeordneten hohlen Spinnkonus (5), wobei das Spinngehäuse (13) eine koaxial und im Abstand zum Spinnkonus (5) angeordnete, einen Hüllspalt (15) bildende Hüllwand (14) aufweist und
- einer mit Druckluft beaufschlabaren Düsenvorrichtung (6) zur Erzeugung eines den Spinnkonus (5) im Hüllspalt (15) umlaufenden Luftstroms,
**dadurch gekennzeichnet, dass**
der Spinnkonus (5) und die Hüllwand (14) zur Bildung einer Kondensatoreinheit (21) einander unter Zwischenlage des Hüllspaltes (15) gegenüberliegend angeordnete, ein Elektrodenpaar bildende Elektroden (20) aufweisen.

2. Spinnvorrichtung nach Anspruch 1, **dadurch gekennzeichnet, dass** die Elektroden (20) einander gegenüberliegend an der Hüllwand (14) und/oder dem Spinnkonus (5) gegenüber der Hüllwand (14) bzw. dem Spinnkonus (5) isoliert angebracht sind.

3. Spinnvorrichtung nach Anspruch 1 oder 2, **dadurch gekennzeichnet, dass** sich zwei oder mehrere Elektrodenpaare über einen in Umfangsrichtung von Hüllwand (14) und Spinnkonus (5) abgegrenzten Bereich erstrecken.

4. Spinnvorrichtung nach einem oder mehreren der vorhergehenden Ansprüche, **dadurch gekennzeichnet, dass** die Elektroden (20) spiralförmig an der Hüllwand (14) und dem Spinnkonus (5) gegenüber der Hüllwand (14) bzw. dem Spinnkonus (5) isoliert angeordnet sind.

5. Spinnvorrichtung nach einem oder mehreren der vorhergehenden Ansprüche, **dadurch gekennzeichnet, dass** dem Hüllspalt (15) zugewandte Oberflächen der Elektroden (20) wenigstens einer Kondensatoreinheit (21) ein elektrisch nicht leitfähiges Material aufweisen.

6. Spinnstelle einer Luftspinnmaschine zum Herstellen eines Fadens (16) aus einem zugeführten Faserband, mit
einer Spinnvorrichtung (2) zur Bildung des Fadens (16) aus wenigstens einem über ein Streckwerk (1) zugeführten Faserband (11), und
einer Aufspuleinrichtung zum Aufspulen des Fadens (16) auf eine Auflaufspule,
**dadurch gekennzeichnet, dass**
die Spinnvorrichtung (2) nach einem oder mehreren der Ansprüche 1 bis 5 ausgebildet ist.

7. Verfahren zur Überwachung des Spinnvorgangs an einer Spinnvorrichtung (2), **gekennzeichnet durch** die Spinnvorrichtung (2) nach einem oder mehreren der Ansprüche 1 bis 5, wobei zur Erfassung wenigstens einer Charakteristik der Umwindefasern in dem Hüllspalt (15) die Schritte:
- Aufbauen eines elektrischen Feldes im Bereich zwischen den Elektroden (20),
- Erfassung der Kapazität der Kondensatoreinheit (21) im fadenfreien Zustand,
- Erfassung der Kapazitätsänderung im Spinnbetrieb,
- Überwachung und Abgleich der Kapazitätsänderung mit einem für einen ordnungsgemäßen Faden bekannten oder zuvor ermittelten Referenzwert oder Referenzwertbereich,
durchgeführt werden.

8. Verfahren nach Anspruch 7, **gekennzeichnet durch** eine Spinnvorrichtung (2) nach Anspruch 4, wobei mit den Schritten eine Erfassung von Kapazitätsänderungen und ihrer Frequenz im Spinnbetrieb sowie eine Überwachung und Abgleich der Frequenz der Kapazitätsänderungen mit für einen ordnungsgemäßen Faden bekannten oder zuvor ermittelten Referenzwert oder Referenzwertbereich zum Rückschluss auf die Rotationsgeschwindigkeit der die Faserdichte ausmachenden Umwindefasern im Hüllspalt erfolgt.

9. Verfahren nach Anspruch 7 oder 8, **dadurch gekennzeichnet, dass** wenigstens eine Charakteristik des Spinnvorgangs wie ein eine Wirbelkammer der Spinnvorrichtung beaufschlagender Druck, eine Faserbandzuführgeschwindigkeit oder eine Fadenabzugsgeschwindigkeit im Falle einer Abweichung von dem Referenzwert bzw. dem Referenzwertbereich angepasst wird oder der Spinnvorgang gestoppt wird.

## Claims

1. A spinning device for manufacturing a thread (16) from a supplied fibre band by means of a circulating air flow, with
- a hollow spinning cone (5) arranged in a spinning housing (13), the spinning housing (13) having an envelope wall (14) which is arranged coaxially with and at a distance from the spinning cone (5) and forms an envelope gap (15), and
- a nozzle device (6) which can be supplied with compressed air for generating an air flow circulating the spinning cone (5) in the envelope gap (15),
**characterised in that**
the spinning cone (5) and the envelope wall (14) for forming a capacitor unit (21) have electrodes (20) arranged opposite one another with the envelope gap (15) interposed, forming a pair of electrodes.

2. The spinning device according to claim 1, **characterised in that**, **in that** the electrodes (20) are attached opposite one another on the envelope wall (14) and/or the spinning cone (5) in an insulated manner with respect to the envelope wall (14) and/or the spinning cone (5).

3. The spinning device according to claim 1 or 2, **characterised in that** two or more pairs of electrodes extend over an area delimited in the circumferential direction of the envelope wall (14) and the spinning cone (5).

4. The spinning device according to one or more of the previous claims, **characterised in that** the electrodes (20) are arranged in a spiral on the envelope wall (14) and the spinning cone (5) in an insulated manner with respect to the envelope wall (14) and/or the spinning cone (5).

5. The spinning device according to one or more of the previous claims, **characterised in that** surfaces of the electrodes (20) of at least one capacitor unit (21) facing the envelope gap (15) have an electrically non-conductive material.

6. A spinning position of an air-spinning machine for manufacturing a thread (16) from a supplied fibre band, with
a spinning device (2) for forming a thread (16) from at least one fibre band (11) fed via a drafting system (1), and
a winding device for taking up the thread (16) on a take-up package,
**characterised in that**
the spinning device (2) is formed according to one or more of claims 1 to 5.

7. A method for monitoring the spinning process on a spinning device (2), **characterised by** the spinning device (2) according to one or more of claims 1 to 5, in which the following steps are performed for detecting at least one characteristic of the wrap fibres in the envelope gap (15):
- Build up an electric field in the area between the electrodes (20),
- Detection of the capacitance of the capacitor unit (21) in the condition without thread,
- Recording of the capacitance change in the spinning operation,
- Monitoring and comparison of the capacitance change with a reference value or reference value range known or previously determined for a proper thread.

8. The method according to claim 7, **characterised by** a spinning device (2) according to claim 4, with the steps of detecting capacitance changes and their frequency in the spinning operation, and monitoring the frequency of the capacitance changes and comparing them with a reference value and/or reference value range known or previously determined for a correct thread in order to reach a conclusion about the rotation speed of the wrap fibres in the envelope gap that are decisive for the fibre density.

9. The method according to claim 7 or 8, **characterised in that** at least one characteristic of the spinning process such as a pressure acting on a vortex chamber of the spinning device, a fibre band feed speed or a thread take-up speed is adjusted in case of a deviation from the reference value or the reference value range, or the spinning process is stopped.

## Revendications

1. Gabarit de filage pour la fabrication d'un fil (16) à partir d'une bande de fibres acheminée au moyen d'un courant d'air circulant, avec
- un cône de filature (5) creux disposé dans boîtier de filage (13), par lequel le boîtier de filage (13) présente un bandeau d'enveloppement (14) disposé coaxialement et à distance du cône de filature (5) et formant une colonne d'enveloppement (15), et
- un dispositif à buses (6) est alimenté en air comprimé pour la production d'un flux d'air circulant autour du cône de filature (5) dans la colonne d'enveloppement (15),
**caractérisé en ce que**
le cône de filature (5) et le bandeau d'enveloppement (14) présentent, pour former une unité de condensateur (21), des électrodes (20) disposées l'une en face de l'autre avec interposition de la colonne d'enveloppement (15) et formant une paire d'électrodes.

2. Gabarit de filage selon la revendication 1, **caractérisé en ce que** les électrodes (20) sont placées de manière isolée l'une en face de l'autre dans le bandeau d'enveloppement (14) et/ou dans le cône de filature (5) face au bandeau d'enveloppement (14) ou dans le cône de filature (5).

3. Gabarit de filage selon la revendication 1 ou 2, **caractérisé en ce que** deux paires d'électrodes ou plus couvrent une zone limitée dans la direction périphérique du bandeau d'enveloppement (14) et du cône de filature (5).

4. Gabarit de filage selon une ou plusieurs revendications précédentes, **caractérisé en ce que** les électrodes (20) sont positionnées de manière isolée en forme de spirale sur le bandeau d'enveloppement (14) et sur le cône de filature (5) face au bandeau d'enveloppement (14) ou sur le cône de filature (5).

5. Gabarit de filage selon une ou plusieurs revendications précédentes, **caractérisé en ce que** les surfaces des électrodes (20) d'au moins une unité de condensateur (21) tournées vers la colonne d'enveloppement (15) présentent un matériau électriquement non conducteur.

6. Poste de filage d'une machine à filer à air comprimé pour la fabrication d'un fil (16) à partir d'une bande de fibres acheminée, avec
un dispositif de filature (2) pour la formation du fil (16) d'au moins une bande de fibres (11) acheminée par un dispositif d'étirage (1), et
un dispositif de bobinage pour enrouler le fil (16) sur une bobine d'enroulement,
**caractérisé en ce que**
le dispositif de filature (2) est conçu conformément à une ou plusieurs des revendications 1 à 5.

7. Procédé de surveillance du processus de filage sur un dispositif de filature (2), **caractérisé en ce que** le dispositif de filature (2) est conforme à une ou plusieurs des revendications 1 à 5, par lequel les étapes suivantes sont suivies pour détecter au moins une caractéristique des fibres d'enroulement dans la colonne d'enveloppement (15) :
- créer un champ électrique dans la zone entre les électrodes (20),
- enregistrer la capacité de l'unité de condensateur (21) à l'état sans fil,
- enregistrer les modifications de capacité dans les opérations de filature,
- surveiller et ajuster les modifications de capacité avec une valeur de référence ou une plage de valeurs de référence connue ou précédemment déterminée pour un fil correct

8. Procédé selon la revendication 7, **caractérisé en ce que** le dispositif de filature (2) selon la revendication 4 se produit selon les étapes de détection de modification de capacité et sa fréquence dans l'opération de filature ainsi que la surveillance et l'ajustement de la fréquence des modifications de capacité avec des fils corrects connus ou une valeur de référence ou une place de référence précédemment déterminée pour déduire la vitesse de rotation des fibres d'enrobage qui constituent la densité des fibres dans la colonne d'enveloppement.

9. Procédé selon la revendication 7 ou 8, **caractérisé en ce que** au moins une caractéristique du processus de filage, tout comme une pression exercée sur une chambre de turbulence du dispositif de filature, une vitesse d'alimentation de la bande de fibres ou une vitesse d'extraction du fil, est ajustée en cas d'écart par rapport à la valeur ou à la plage de valeurs de référence ou le processus de filage est arrêté.
